# EUROPEAN PATENT SPECIFICATION

(11) **EP 1 179 897 B1**
(45) Date of publication and mention of the grant of the patent: **27.09.2006**
(21) Application number: 01117415.8
(22) Date of filing: 19.07.2001
(51) Int. Cl.: H04B 7/26, H04L 1/08, H04L 1/00

(54) **Transmission method with different operation modes**
Übertragungsverfahren mit verschiedenen Betriebsmoden
Méthode de transmission ayant différents modes d'opération

(30) Priority: 11.08.2000 IT VA000028
(43) Date of publication of application: 13.02.2002
(73) Proprietor: Siemens S.p.A., 20126 Milano (IT)
(72) Inventor: Santacesaria, Claudio, 20139 Milano (IT)
(74) Representative: Giustini, Delio

(56) References cited:
- EP-A- 0 964 540
- WO-A-00/41318
- WO-A-98/51111
- US-A- 5 673 266
- US-A- 5 757 813
- LAMBRETTE U ET AL: "OFDM BURST FREQUENCY SYCHRONIZATION BY SINGLE CARRIER TRAINING DATA" IEEE COMMUNICATIONS LETTERS, IEEE SERVICE CENTER, PISCATAWAY,US, US, vol. 1, no. 2, 1 March 1997 (1997-03-01), pages 46-48, XP000687090 ISSN: 1089-7798

## Description

### FIELD OF THE INVENTION

The present invention relates to radio transmission systems of the point-to-point or point-multipoint type with burst transmission, and more in particular to a transmission method having different operation modes.

### BACKGROUND OF THE INVENTION

In point-multipoint systems it is defined a specific station, called master that communicates with some other stations, called terminals. The classical terminology defines downlink channel, the one going from the master towards the terminals and uplink channel the one in the opposite direction. The two logical channels can occupy separate radio channels (frequency duplex systems) or the same radio channel, using time division (time duplex systems). For convenience, reference shall be made here after to frequency duplex systems but the mention of this type of systems shall not be construed as a limiting one.

The adaptive modulation is a recently conceived technique, consisting in transmitting data, coded according to different modulations. These modulations are selected so that transmissions from and/or to addressee stations, connected through a channel having favourable transmission characteristics, are made with a comparatively large number of symbols (multilevel modulation), while transmissions from and/or to stations connected through channels having comparatively less good characteristics, are made with a minimum number of symbols (basic modulation).

Considering that the characteristics of said channels could change with time, also the type of modulation, used to communicate with a given station, can change accordingly.

Multilevel modulations are particularly convenient in terms of information quantity per transmitted symbol, since the information associated to each symbol is as high as higher is the number of the different symbols that can be transmitted. On the other hand, at equal transmission power, multilevel modulations can be conveniently exploited only if the channel shows comparatively limited attenuation characteristics and limited interference.

On the basis of the channel characteristics, with the adaptive modulation it is possible to adapt the modulation level employing a multilevel modulation (for instance a 16QAM or a 64QAM) if channel attenuation and interference are comparatively limited (this can occur for instance if the addressee station is close), or a stronger modulation (for instance QPSK or 4QAM) called basic modulation if the channel attenuation and interference are greater (example: far addressee station).

WO 98/51111 A1 patent application discloses a flexible two-way communications system of the UMTS type with primary and secondary stations. Downlink communications from the primary stations comprise TDMA transmission. Uplink communications from the secondary stations comprise CDMA/TDMA transmissions. Data packet transmitted on the downlink are modulated to suit the quality of the link between the primary station and the addressed secondary station. A header applied to the downlink transmission includes information about the location of the respective data packets relative to a reference point and the modulation scheme applied to each data packet.

US 5,757,813 A patent document discloses a method for indicating a change in coding rate so as to maintain synchronization between a communication system and a mobile station. A mobile station can request either to increase or decrease the degree of channel coding. The system can grant the request and send an indication to the mobile station indicating the new degree of coding. The indication is provided outside the field in which the coding rate is going to be changed. A modulation symbol alphabet can also be changed.

Other systems are known in which the error correction code can be selected on the basis of the configuration or in automatic mode by a station, and communicated to the corresponding station through signalling messages. This technique is called flexible coding.

The systems with adaptive modulation leave a difference of several decibel (generally 6 or 7dB) between a modulation and the next one, therefore the cases in which channel conditions are a few decibel lower than the required level for a modulation but several decibel higher than the level of the lower modulation are frequent, and this clearly produces inefficiency due to the higher granularity of the lower modulation.

Moreover, in many cases, there could be situations in which also the strongest modulation (e.g. QPSK) of the system cannot be used. Therefore, it would be useful to have an operation mode that can operate also in these conditions.

### OBJECT AND SUMMARY OF THE INVENTION

It was found and it is the scope of the invention, a transmission method enabling to use different combinations of data modulation and coding in the same way of the different modulations in the case of adaptive modulation transmission. These combinations are defined hereafter "physical layer operation modes".

The method of the invention enables to transmit with different modes of the physical layer suitable to operate with a set of values of the signal to noise or signal to interference ratio. According to the channel quality, the preferred granularity is selected to maximize the system capacity without spoiling the performances. At the same time, properly selecting the physical layer modes, it is possible to increase the coverage, that is, enable the system to operate also at higher distance and with worse channel conditions than those necessary for the basic modulation of systems only supporting adaptive modulation, without reducing the system capacity, through the use of a more powerful code and therefore having a higher overhead.

A first transmission method, disclosed in the European Patent Application EP 01113861.7 in the name of the same Applicant, consists in the organization of transmissions in clusters of data, sharing the same operation mode of the physical layer, and in putting a preamble before the data of each cluster, which in addition to the possible usual synchronization and equalisation functions, allows to identify a given operation mode of the physical layer through different symbol sequences.

The length and format of the sequences used as preambles depend on the specific system, but the decision distance between the different sequences shall be such as to enable a reliable recognition of the preamble in all the channel conditions in which the operation mode, identified by the preamble itself, can be used.

According to a preferred embodiment of the invention, to obtain the minimum overhead, the different robust operation modes shall be identified by preambles having a higher reciprocal distance compared to the reciprocal distances of preambles identifying less robust operation modes (operating in better channel conditions).

The decision distance between the different operation modes can be selected according to a parameter appropriately describing the robustness of the transmission. Possible robustness parameters are the signal/noise ratio, the signal/interferent ratio, the signal/noise plus interferent ratio, etc.

A second technique consists in collecting the information, concerning the operation mode of the physical layer of different clusters, in a table, which is then coded with a sequence of bits and periodically transmitted in a given position of the frame.

The incorrect reception of these tables would cause the loss of long data sequences; therefore it is essential to protect said tables. According to other embodiments of the method according to the invention, the tables can be protected with:
- A repetition code enables quick decoding, which can be made with hardware or software of very limited complexity, at the expenses of a given overhead. According to a preferred embodiment, this repetition code can be built with variable redundancy according to the indicated type of operation mode of the physical layer: the information identifying the strongest modulations is more protected and the information identifying less strong modulations is protected with a lower overhead (associated to transmission channels of a better quality);
- a traditional FEC code (example Reed Solomon or concatenated code) can increase the robustness and reduce the overhead at the expenses of a decoding delay that makes it unusable if the following measure is not taken. The stratagem adopted to solve this problem consists in referring the table transmitted in a frame to the next frame. This frame interlacing enables the receiver to decode the code in time to use the information.

### BRIEF DESCRIPTION OF DRAWINGS

The invention, together with further objects and advantages thereof, may be understood from the following detailed description, taken in conjunction with the accompanying drawings, in which:
**Figure 1** shows the frame interlacing that enables the use of the traditional FEC in the protection of the tables,
**Figure 2** shows the variable protection structure of the repetition code, according to a preferred embodiment.

### DESCRIPTION OS SOME EMBODIMENTS OF THE INVENTION

To describe the invention more in detail, it is considered the case in which the adaptive modulation is made using a basic modulation and two multilevel modulations, being the basic modulation the QPSK modulation and the multilevel modulation the 16QAM and 64QAM modulations. Moreover, a family of concatenated codes consisting of an outer Reed Solomon code and an inner convolutional code is considered as error correction codes. Of course, the invention can be conveniently applied also to modulations and codes different from the mentioned ones.

Some possible physical modes that the present invention intends to render interoperable are given in table 1 (RS in the table means Reed Solomon while CC means convolutional code and the fraction following these initials indicates the 'rate').

**Tab. 1**

| | Overhead | Spectral efficiency (relative) | Necessary signal to noise ratio in dB |
|---|---|---|---|
| 64QAM | *23% (RS only)* | *4.6* | *23.5* |
| | *32% (RS + CC7*/*8)* | *4.0* | *21.9* |
| | *36% (RS+CC5*/*6)* | *3.8* | *21.3* |
| | *42% (RS + CC3*/*4)* | *3.4* | *19.7* |
| | *48% (RS+CC2*/*3)* | *3.1* | *19.1* |
| 16QAM | *23% (RS only)* | *3.1* | *17.5* |
| | *32% (RS + CC7*/*8)* | *2.7* | *15.6* |
| | *36% (RS+CC5*/*6)* | *2.6* | *15* |
| | *42% (RS + CC3*/*4)* | *2.3* | *13.7* |
| | *48% (RS+CC2*/*3)* | *2* | *12.5* |
| QPSK | *23% (RS only)* | *1.53* | *10.5* |
| | *32% (RS + CC7*/*8)* | *1.3* | *9.1* |
| | *36% (RS+CC5*/*6)* | *1.28* | *8.3* |
| | *42% (RS + CC3*/*4)* | *1.15* | *7.3* |
| | *48% (RS+CC2*/*3)* | *1.0* | *6.1* |

In order to obtain the results described, it is opportune to select a set of physical modes suitable to the particular application and restrain the interoperability to that set.

To the sole purpose of enabling a simpler description of the invention, it is arbitrarily selected a set of physical modes. This choice depends on the particular system employed, but the invention remains conveniently applicable, with obvious modifications, irrespective of the selected set of modes.

Therefore, it is assumed to operate with the 5 physical modes collected in the following table 2.

**Tab. 2**

| Mode | | Spectral efficiency (relative) | Necessary signal to noise ratio in dB |
|---|---|---|---|
| *A)* | *64QAM + RS* | *4.6* | *23.5* |
| *B)* | *64 QAM + RS + CC3*/*4* | *3.4* | *19.7* |
| *C)* | *16QAM + RS + CC5*/*6* | *2.6* | *15* |
| *D)* | *QPSK + RS* | *1.53* | *10.5* |
| *E)* | *QPSK + RS + CC2*/*3* | *1.0* | *6.1* |

As already said in the summary, this invention proposes the use of the operation modes of the physical layer in an extended way and with interoperability and coexistence of the different modes inside the same radio channel in different time intervals by different terminals. Featuring element of the invention is that it faces and solves in a new way the problem to reliably transfer the information concerning the physical mode in which a transmitter operates in a given time interval. The more complex thing is to adequately protect said information.

### Protection method 1:

This method foresees the use of preambles, differentiated according to the mode for information clusters transmitted with a given mode of the physical layer. The information on the operation mode is obtained recognizing the type of preamble. In general, the preamble, due to its other synchronization and equalization functions, results in having a length already adequate to the transport of the information on the physical mode with opportune redundancy.

Should the length be not sufficient, the preamble shall be extended with some symbols. A careful selection of associations between the physical modes and the preamble sequences at different distance one from the other enables to minimize the overhead maintaining the information robustness. This method has already been described, for the sole adaptive modulation in the above mentioned European Patent Application EP 01113861.7 and the extension of this technique to the operation modes of the physical layer defined above is claimed herein.

As in the case of adaptive modulation, preambles obtained from two different CAZAC sequences, partially cyclically repeated with the addition of some symbols at the tail, can be used. In the case of the example, in which the operation modes are 5, the additional symbols shall be 4. The high distance of the two partially repeated CAZAC sequences is used to distinguish the E mode from the other ones; the additional symbols are used to distinguish the other modes among them, but increase also the protection of the E mode.

The distinction of the E mode shall thus obtain a 13 dB protection, more than sufficient to assure the correct reception at all the terminals operating according to the E mode and even more at the terminals operating according to the other modes. The protection (or gain) is defined in terms of decision distance with respect to a single information bit transmitted with QPSK and gray coding, at equal error probability on the information unit transmitted (for information transmitted it is intended the binary information enabling to distinguish the basic modulation from other modulations).

The D mode is distinguished from A, B and C with 2 of the additional symbols, selected in order to give the maximum distance, and other 2 additional symbols not at maximum distance but different from the other ones.

Mode D is therefore protected with 7.8 dB protection. Being this mode intrinsically stronger than mode E, it is used only if the channel shows conditions such to be able to work with a minimum signal to noise ratio of 10.5 dB: in these conditions the 7.8 dB protection is more than sufficient. The terminals that cannot reliably receive this information are for sure operating in E mode. They can recognize that the mode of the cluster of data is not the mode E while they do not know which one of the other modes is currently in use.

The C mode is distinguished from A and B with a unique symbol selected at the maximum distance with a 3 dB protection and the same occurs for the distinction of the B mode from the A mode.

**Tab. 3**

| | | | | | | | | | | | | | | | | | | |
|---|---|---|---|---|---|---|---|---|---|---|---|---|---|---|---|---|---|---|
| Mode | | | | Repeated CAZAC | | | | | | | | | | | Additional symbols | | | |
| E | 1 | j | -1 | 1 | -1 | j | 1 | 1 | 1 | j | -1 | 1 | -1 | j | j | -j | j | -j |
| D | j | 1 | 1 | -1 | j | -1 | 1 | 1 | j | 1 | 1 | -1 | j | -1 | 1 | -1 | -j | j |
| C | j | 1 | 1 | -1 | j | -1 | 1 | 1 | j | 1 | 1 | -1 | j | -1 | -1 | 1 | 1 | 1 |
| B | j | 1 | 1 | -1 | j | -1 | 1 | 1 | j | 1 | 1 | -1 | j | -1 | -1 | 1 | -1 | 1 |
| A | j | 1 | 1 | -1 | j | -1 | 1 | 1 | j | 1 | 1 | -1 | j | -1 | -1 | 1 | -1 | -1 |

With a very limited overhead versus the normal length of the preamble (4 additional symbols) the reliable determination of the physical operation mode is obtained with adequate protection.

### Protection method 2:

This method foresees the presence of a table, or map, describing through appropriate coding, the operation mode of a set of clusters belonging to a structure, called frame, that collects different information clusters.

The selection of a coding based on a repetition code in which the overhead and therefore the code robustness are different according to the type of physical mode to protect is a featuring element of the invention.

To the sole purpose of describing the invention in a simple manner, it is considered the example of the 5 modes (A, B, C, D and E) of the previous case, being intended however that the invention can be applied *mutatis mutandis* also to transmission systems employing a different set of modes.

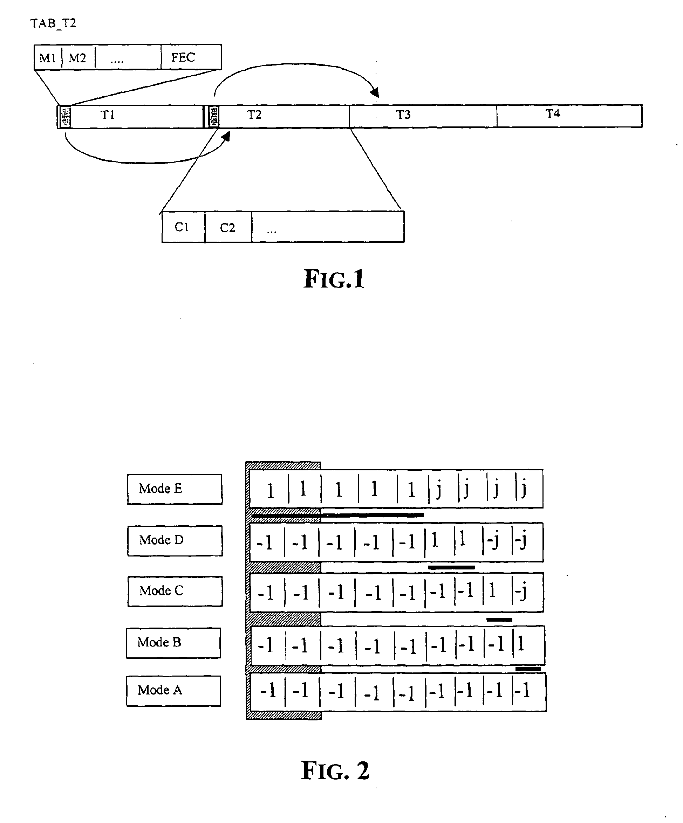

Figure 2 shows a possible coding: this coding has been built considering that the information of the employed operation mode is always transmitted with the basic modulation without code. The no-code modulation requires a signal to noise ratio on the channel of at least 16 dB, while the physical mode E can operate with 6.1 dB: for this reason it is necessary to protect the information distinguishing the E mode from the other ones with 10 dB margin.

This can be made employing a repetition code consisting of 5 QPSK symbols, to which opposite values are assigned (and therefore at maximum distance on the QPSK constellation). These opposite values are conventionally identified with 1 and -1 while j and -j indicate the other two possible values of a QPSK symbol: value 1 identifies the modulation E, and value -1 all the other ones. This code, expressed in terms of 5 QPSK symbols, could equivalently be seen as 10-time repetition of a binary information.

The D mode requires a protection of 5.5 dB only, that can be obtained with 2 symbols to which opposite values are assigned: said two symbols shall distinguish the D mode from the remaining A, B and C. The C mode requires 1dB protection and therefore it is sufficient to use a symbol to which opposite values are assigned to identify the C mode and distinguish it from all the remaining A and B. The distinction between A and B mode, when transmitted with a QPSK symbol does not require any protection, therefore a unique symbol is sufficient, to which any values can be assigned.

In this way, with 9 QPSK symbols the operation mode of the physical layer is safely transmitted among the 5 possible ones. Symbols can be reduced to 7 if it is observed that the last 4 bits of the coding corresponding to modulation E have not been used, as well as the last two bits of the D modulation and the last one of the C: assigning the values j and -j to said unused symbols, the distance of the E mode from the other ones can be increased. After this operation it is possible to abandon the first two symbols of all the codings, represented on dark background in figure 2. Figure 2 shows also the limits with a bold line.

The terminals can always determine the right physical mode of an information cluster destined to itself or determine that the cluster is transmitted with a physical mode that the terminal cannot correctly demodulate, due to the position and channel conditions.

### Protection method 3:

This method, like the previous one, foresees the presence of a table, or map, describing the operation mode of each cluster belonging to a structure called frame. However, in this case the coding takes place coding the various operation modes in a banal way with different bit sequences (3 bit are sufficient for 5 modes) and protecting the whole table with a traditional error protection code (for instance Reed Solomon or concatenated). The peculiarity featuring the invention, is the association of the table transmitted in a frame with the content of the next frame, as shown in Fig. 1. The scope of this interlacing is to give time to the decoder to decode the error correction code.

The frames T1, T2 etc. come one after the other on the channel; frame T1 contains the table relevant to frame T2 (TAB_T2); in this table the information M1, M2 etc. protected with a FEC code appears. M1 is the coding representing the operation mode of the physical layer inside the cluster C1, M2 concerns cluster C2 and so on. In its simplest realization, applied to the example of the 5 operation modes of the physical layer, M1, M2 etc. can be 3-bit strings assuming different configurations according to the operation mode.

However, the table can contain also other information, such as the terminal or the connection identification; in this case, the information on the operation mode can also turn out to be implicit (for instance as association with a given terminal) and not being explicitly coded. As a matter of fact, this protection method results profitable just when the table includes also other information in addition to that, explicit or implicit, on the operation mode of the physical layer.

Therefore, though some particular embodiments of the present invention have been shown and described, it should be understood that the present invention is not limited thereto since other embodiments may be made by those skilled in the art without departing from the scope thereof. It is contemplated that the present invention encompasses any and all such embodiments covered by the following claims.

## Claims

1. Non-continuous transmission method from a transmitting station to a receiving one, including the steps of:
- arranging data in clusters of bits preceded by a synchronization preamble;
- modulating and coding, in the transmitting station, each cluster according to a particular operation mode of the physical layer, distinguished at least by a particular modulation and a particular coding of data;
- demodulating and decoding each cluster, in the receiving station, according to said operation mode with which the cluster was generated, communicated to the receiving station by a sequence of bits identifying the operation mode included in the same synchronization preamble of said cluster,
**characterized in that**:
- the highest incremental decision distance among said identification sequences of the operation modes enables to distinguish the most robust operation mode from the other less robust operation modes corresponding to transmissions in better channel conditions,
- the lesser incremental decision distances enable to distinguish less robust operation modes among them;
- said highest incremental decision distance is protected with higher redundancy;
- said lesser incremental decision distances are protected with redundancy increasingly reduced in proportion to a robustness parameter of the operation mode itself either corresponding to: signal to noise ratio; signal to interferent ratio; signal to noise-plus interferent ratio.

2. Transmission method according to claim 1, **characterized in that** each cluster is preceded by a synchronization preamble and said identification sequence of the physical layer operation mode consists of the same synchronization preamble of said cluster followed by a sequence of additional bits.

3. Transmission method according to claim 1, **characterized in that** said clusters are organized in frames including subsequent clusters and said identification sequences relevant to the different subsequent clusters are grouped and jointly transmitted inside the frame itself.

4. Transmission method according to claim 1, **characterized in that** said clusters are organized in frames including subsequent clusters and said identification sequences relevant to the different subsequent clusters are grouped and jointly transmitted inside a frame, previously transmitted with respect to the frame they refer to.

5. Transmission method according to claim 4, **characterized in that** said previously transmitted frame is the frame immediately preceding the one to which said identification sequences are referred to.

6. Transmission method according to claim 1, **characterized in that** said identification sequences include partially repeated CAZAC sequences.

7. Transmission method according to claim 6, **characterized in that** said identification sequences include some additional symbols.

8. Method according to any claim 4 or 6, **characterized in that** each one of said identification sequences is coded in binary form without redundancy, explicitly or implicitly embedded in some other type of information, and subsequently said group of sequences is jointly protected with a traditional error correction code (FEC).

## Patentansprüche

1. Diskontinuierliches Übertragungsverfahren von einer sendenden Station zu einer empfangenden Station, einschließlich der Schritte
- des Anordnens von Daten in Bitclustern, denen eine Synchronisierungspräambel voransteht;
- des Modulierens und Codierens jedes Clusters in der sendenden Station, gemäß einem besonderen Betriebsmodus der Bitübertragungsschicht, mindestens **gekennzeichnet durch** eine besondere Modulation und eine besondere Codierung der Daten;
- des Demodulierens und Decodierens jedes Clusters in der empfangenden Station, gemäß dem besagten Betriebsmodus, mit welchem der Cluster erzeugt worden ist und der **durch** eine Bitfolge, welche den Betriebsmodus identifiziert und die in derselben Synchroniaierungspräambel des besagten Clusters enthalten ist, an die empfangende Station übermittelt wird,
**dadurch gekennzeichnet, dass:**
- es der höchste inkrementelle Entscheidungsabstand unter den besagten Identifikationsfolgen der Betriebsmodi ermöglicht, den fehlerfestesten Betriebsmodus von anderen weniger fehlerfesten Betriebsmodi, die Übertragungen unter besseren Kanalbedingungen entsprechen, zu unterscheiden,
- es die niedrigeren inkrementellen Entscheidungsabstände ermöglichen, die weniger fehlerfesten Betriebsmodi unter diesen zu unterscheiden;
- der besagte höchste inkrementelle Entscheidungsabstand durch eine höhere Redundanz geschützt wird;
- die besagten niedrigeren inkrementellen Entscheidungsabstände **durch** eine Redundanz geschützt werden, die im Verhältnis zu einem Fehlerfestigkeitsparameter des Betriebsmodus selbst immer weiter reduziert wird, welcher entweder dem Signal-Geräusch-Abstand, dem Signal-Störungs-Abstand oder dem Signal-Geräusch-plus-Störungs-Abstand entspricht.

2. Übertragungsverfahren gemäß Anspruch 1, **dadurch gekennzeichnet, dass** jedem Cluster eine Synchronisierungspräambel voransteht und dass die besagte Identifizierungsfolge des Betriebsmodus der Bitübertragungsschicht aus derselben Synchronisierungspräambel des besagten Clusters besteht, gefolgt von einer Folge zusätzlicher Bits.

3. Übertragungsverfahren gemäß Anspruch 1, **dadurch gekennzeichnet, dass** die besagten Cluster in Rahmen organisiert sind, welche aufeinander folgende Cluster beinhalten, und dass die besagten, für die verschiedenen aufeinander folgenden Cluster relevanten Identifizierungsfolgen innerhalb des Rahmens selbst gruppiert und gemeinsam übertragen werden.

4. Übertragungsverfahren gemäß Anspruch 1, **dadurch gekennzeichnet, dass** die besagten Cluster in Rahmen organisiert sind, welche aufeinander folgende Cluster beinhalten, und dass die besagten, für die verschiedenen aufeinander folgenden Cluster relevanten Identifizierungsfolgen innerhalb eines Rahmens gruppiert und gemeinsam übertragen werden, der vor dem Rahmen, auf welchen sie sich beziehen, übertragen wird.

5. Übertragungsverfahren gemäß Anspruch 4, **dadurch gekennzeichnet, dass** der besagte zuvor übertragene Rahmen der Rahmen ist, der unmittelbar demjenigen vorangeht, auf welchen sich die besagten Identifizierungsfolgen beziehen.

6. Übertragungsverfahren gemäß Anspruch 1, **dadurch gekennzeichnet, dass** die besagten Identifizierungsfolgen teilweise wiederholte CAZAC-Folgen beinhalten.

7. Übertragungsverfahren gemäß Anspruch 6, **dadurch gekennzeichnet, dass** die besagten Identifizierungsfolgen einige zusätzliche Symbole beinhalten.

8. Verfahren gemäß Anspruch 4 oder 6, **dadurch gekennzeichnet, dass** jede der besagten Identifizierungsfolgen binär ohne Redundanz codiert sowie explizit oder implizit in andere Arten von Informationen eingebettet ist, und dass in der Folge die besagte Gruppe aus Folgen gemeinsam mittels eines herkömmlichen Fehlerkorrekturcodes (FEC) geschützt wird.

## Revendications

1. Procédé de transmission non continue d'une station émettrice à une station réceptrice, incluant les étapes consistant à :
- classer les données en groupes de bits précédés d'un préambule de synchronisation ;
- moduler et coder, dans la station émettrice, chaque groupe en fonction d'un mode de fonctionnement particulier de la couche physique, qui se distingue au moins par une modulation particulière et un codage particulier des données ;
- démoduler et décoder chaque groupe, dans la station émettrice, en fonction dudit mode de fonctionnement qui a permis de générer le groupe, de le transmettre à la station réceptrice en une séquence de bits identifiant le mode de fonctionnement dans le même préambule de synchronisation que ledit groupe,
**caractérisé en ce que :**
- la plus grande distance logique incrémentale parmi les séquences d'identification des modes de fonctionnement s'active pour distinguer le mode de fonctionnement le plus robuste des autres modes de fonctionnement les moins robustes correspondant aux transmissions dans de meilleures conditions de canaux ;
- les plus petites distances logiques incrémentales permettent de distinguer parmi les modes de fonctionnement, les modes les moins robustes ;
- ladite plus grande distance logique incrémentale est protégée par une plus grande redondance ;
- les plus petites distances logiques incrémentales sont protégées par la redondance progressivement réduite proportionnellement à un paramètre de robustesse du mode de fonctionnement lui-même correspondant à : un rapport signal/bruit ; un rapport signal/parasites ou un rapport signal/bruit plus parasites.

2. Procédé de transmission selon la revendication 1, **caractérisé en ce que** chaque groupe est précédé d'un préambule de synchronisation et ladite séquence d'identification du mode de fonctionnement de la couche physique se compose du même préambule de synchronisation dudit groupe suivi d'une séquence de bits supplémentaires.

3. Procédé de transmission selon la revendication 1, **caractérisé en ce que** lesdits groupes sont organisés en trames incluant les groupes suivants et lesdites séquences d'identification appropriées aux différents groupes suivants sont regroupées et transmises conjointement à l'intérieur de la trame elle-même.

4. Procédé de transmission selon la revendication 1, **caractérisé en ce que** lesdits groupes sont organisés en trames incluant les groupes suivants et lesdites séquences d'identification appropriées aux différents groupes suivants sont regroupées et transmises conjointement à l'intérieur d'une trame, précédemment transmises par rapport à la trame à laquelle elles font référence.

5. Procédé de transmission selon la revendication 4, **caractérisé en ce que** ladite trame précédemment transmise est la trame précédant immédiatement celle à laquelle font référence les séquences d'identification.

6. Procédé de transmission selon la revendication 1, **caractérisé en ce que** lesdites séquences d'identification incluent des séquences CAZAC partiellement répétées.

7. Procédé de transmission selon la revendication 6, **caractérisé en ce que** lesdites séquences d'identification incluent des symboles supplémentaires.

8. Procédé selon l'une des revendications 4 ou 6, **caractérisé en ce que** chacune des séquences d'identification est codée en binaire sans redondance, intégrée explicitement ou implicitement dans un autre type d'informations, et ledit groupe de séquences est ensuite conjointement protégé par un code de correction d'erreurs classique (FEC).
